(19) Europäisches Patentamt / European Patent Office / Office européen des brevets

(11) EP 4 428 193 A1

(12) **EUROPEAN PATENT APPLICATION**
published in accordance with Art. 153(4) EPC

(43) Date of publication:
**11.09.2024 Bulletin 2024/37**

(21) Application number: **22889667.6**

(22) Date of filing: **16.09.2022**

(51) International Patent Classification (IPC):
***C08L 69/00*** *(2006.01)* ***C08J 5/00*** *(2006.01)*
***C08K 5/13*** *(2006.01)* ***C08K 5/1515*** *(2006.01)*
***C08K 5/50*** *(2006.01)* ***C08K 5/51*** *(2006.01)*
***C08K 5/53*** *(2006.01)*

(52) Cooperative Patent Classification (CPC):
**C08J 5/00; C08K 5/13; C08K 5/1515; C08K 5/50; C08K 5/51; C08K 5/53; C08L 69/00;** Y02W 30/62

(86) International application number:
**PCT/JP2022/034682**

(87) International publication number:
**WO 2023/079843 (11.05.2023 Gazette 2023/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.11.2021 JP 2021180295**
**30.08.2022 JP 2022136663**

(71) Applicant: **Mitsubishi Engineering-Plastics Corporation**
**Tokyo 105-0021 (JP)**

(72) Inventor: **AKATSUKA, Wataru**
**Hiratsuka-shi, Kanagawa 254-0016 (JP)**

(74) Representative: **Müller-Boré & Partner Patentanwälte PartG mbB**
**Friedenheimer Brücke 21**
**80639 München (DE)**

# (54) POLYCARBONATE RESIN COMPOSITION

(57) A polycarbonate resin composition comprising, per 100 mass parts of a polycarbonate resin (A), 0.001 to 0.3 mass parts of an arylphosphine oxide (B) and 0.0012 to 0.03 mass parts of a phenolic structure-bearing compound (C1), wherein the phenolic structure-bearing compound (C1) is at least one selection from bisphenol A, 4-tert-butylphenol, cumylphenol, and phenol; and in a case of containing the bisphenol A, the content thereof is 0.002 to 0.03 mass parts; in a case of containing the 4-tert-butylphenol, the content thereof is 0.0012 to 0.01 mass parts; in a case of containing the cumylphenol, the content thereof is 0.0012 to 0.01 mass parts; and in a case of containing the phenol, the content thereof is 0.0012 to 0.01 mass parts.

EP 4 428 193 A1

## Description

[Technical Field]

The present invention relates to a polycarbonate resin composition and more particularly relates to a polycarbonate resin composition that exhibits a favorable hue and an excellent resistance to moist heat discoloration, and to a molded article from this polycarbonate resin composition.

[Background Art]

Polycarbonate resin has excellent mechanical properties, e.g., impact resistance and so forth, and also have an excellent heat resistance, an excellent transparency, and so forth, and as a result are widely used in diverse applications, e.g., various optical components, components in electric and electronic equipment, automotive interior and exterior trim components, OA equipment components, sheet, mechanical components, building materials, and so forth.

In many instances, upgraded-functionality polycarbonate resin compositions, as provided by imparting thereto functionality by the incorporation of various additives, are used in numerous applications. For example, PTL 1 describes an antistatic polycarbonate resin containing, as an antistatic agent, distearylhydroxylamine, triphenylamine, tri-n-octylphosphine oxide, triphenylphosphine oxide, pyridine N-oxide, ethoxylated sorbitan monolaurate, or a prescribed siloxane.

Amid the recent acceleration of demands for higher functionalities and higher performance, improvements in the hue and resistance to moist heat discoloration, in particular, are being required of polycarbonate resin.

[Citation List]

[Patent Literature]

[PTL 1] JP H11-279396 A

[Summary of Invention]

[Technical Problem]

The present invention has been made considering the aforementioned circumstances, and an object of (problem for) the present invention is to provide a polycarbonate resin composition that exhibits a favorable hue and an excellent resistance to moist heat discoloration.

[Solution to Problem]

As a result of intensive and extensive investigations in order to address the aforementioned problem, the present inventor has found out that a favorable hue and an excellent resistance to moist heat discoloration is exhibited by a polycarbonate resin that contains an arylphosphine oxide and a phenolic structure-bearing compound, arylphosphine, or epoxy compound, each in a prescribed amount, and arrived at the present invention as a result.

The present invention relates to the polycarbonate resin composition and a molded article described in the following.

1. A polycarbonate resin composition comprising, per 100 mass parts of a polycarbonate resin (A), 0.001 to 0.3 mass parts of an arylphosphine oxide (B) and 0.0012 to 0.03 mass parts of a phenolic structure-bearing compound (C1), wherein the phenolic structure-bearing compound (C1) is at least one selection from bisphenol A, 4-tert-butylphenol, cumylphenol, and phenol; and in a case of containing the bisphenol A, the content thereof is 0.002 to 0.03 mass parts; in a case of containing the 4-tert-butylphenol, the content thereof is 0.0012 to 0.01 mass parts; in a case of containing the cumylphenol, the content thereof is 0.0012 to 0.01 mass parts; and in a case of containing the phenol, the content thereof is 0.0012 to 0.01 mass parts.
2. The polycarbonate resin composition of the above 1, wherein the arylphosphine oxide (B) is triphenylphosphine oxide.
3. The polycarbonate resin composition of the above 1, further comprising 0.001 to 0.3 mass parts of an arylphosphine (C2).
4. The polycarbonate resin composition of the above 3, wherein the arylphosphine (C2) is triphenylphosphine.
5. The polycarbonate resin composition of the above 3, wherein a mass ratio C2/B between the arylphosphine (C2) and the arylphosphine oxide (B) is at least 0 and not greater than 6.

6. The polycarbonate resin composition of the above 1, further comprising 0.001 to 0.3 mass parts of an epoxy compound (C3).
7. The polycarbonate resin composition of the above 1, wherein the polycarbonate resin (A) comprises a recycled polycarbonate resin.
8. A pellet of the polycarbonate resin composition of any of the above 1 to 7.
9. A molded article comprising the polycarbonate resin composition of any of the above 1 to 7.
10. A molded article formed from pellets of the polycarbonate resin composition of the above 8.

[Advantageous Effects of Invention]

The polycarbonate resin composition according to the present invention exhibits a favorable hue and an excellent resistance to moist heat discoloration.

[Description of Embodiments]

The present invention is described in detail in the following using embodiments, examples, and so forth.
Unless specifically indicated otherwise, in the present Description "to" in the specification of a numerical value range is used in the sense of including the numerical values provided before and after the "to" as the lower limit and upper limit.
The polycarbonate resin composition according to the present invention characteristically contains, per 100 mass parts of a polycarbonate resin (A), 0.001 to 0.3 mass parts of an arylphosphine oxide (B) and 0.0012 to 0.03 mass parts of a phenolic structure-bearing compound (C1), wherein the phenolic structure-bearing compound (C1) is at least one selection from bisphenol A, 4-tert-butylphenol, cumylphenol, and phenol and the content is 0.002 to 0.03 mass parts for the case of containing bisphenol A, 0.0012 to 0.01 mass parts for the case of containing 4-tert-butylphenol, 0.0012 to 0.01 mass parts for the case of containing cumylphenol, and 0.0012 to 0.01 mass parts for the case of containing phenol.

[Polycarbonate Resin (A)]

The polycarbonate resin (A) used in the present invention is not particularly limited and various polycarbonate resins may be used. Polycarbonate resin can be classified into aromatic polycarbonate resin, in which each of the carbons directly bonded to the carbonate bond is an aromatic carbon, and aliphatic polycarbonate resin, in which they are aliphatic carbons, and either of these can be used. Aromatic polycarbonate resin is preferred therebetween for the polycarbonate resin (A) considering, for example, the heat resistance, mechanical properties, and electrical properties.
Of the monomers comprising the starting materials for aromatic polycarbonate resin, aromatic dihydroxy compounds can be exemplified by the following:

dihydroxybenzenes, e.g., 1,2-dihydroxybenzene, 1,3-dihydroxybenzene (i.e., resorcinol), and 1,4-dihydroxybenzene;
dihydroxybiphenyls, e.g., 2,5-dihydroxybiphenyl, 2,2'-dihydroxybiphenyl, and 4,4'-dihydroxybiphenyl;
dihydroxynaphthalenes, e.g., 2,2'-dihydroxy-1,1'-binaphthyl, 1,2-dihydroxynaphthalene, 1,3-dihydroxynaphthalene, 2,3-dihydroxynaphthalene, 1,6-dihydroxynaphthalene, 2,6-dihydroxynaphthalene, 1,7-dihydroxynaphthalene, and 2,7-dihydroxynaphthalene;
dihydroxydiaryl ethers, e.g., 2,2'-dihydroxydiphenyl ether, 3,3'-dihydroxydiphenyl ether, 4,4'-dihydroxydiphenyl ether, 4,4'-dihydroxy-3,3'-dimethyldiphenyl ether, 1,4-bis(3-hydroxyphenoxy)benzene, and 1,3-bis(4-hydroxyphenoxy)benzene;
bis(hydroxyaryl)alkanes such as 2,2-bis(4-hydroxyphenyl)propane (i.e., bisphenol A), 1,1-bis(4-hydroxyphenyl)propane, 2,2-bis(3-methyl-4-hydroxyphenyl)propane (i.e., bisphenol C), 2,2-bis(3-methoxy-4-hydroxyphenyl)propane, 2-(4-hydroxyphenyl)-2-(3-methoxy-4-hydroxyphenyl)propane, 1,1-bis(3-tert-butyl-4-hydroxyphenyl)propane, 2,2-bis(3,5-dimethyl-4-hydroxyphenyl)propane, 2,2-bis(3-cyclohexyl-4-hydroxyphenyl)propane, 2-(4-hydroxyphenyl)-2-(3-cyclohexyl-4-hydroxyphenyl)propane, $\alpha,\alpha'$-bis(4-hydroxyphenyl)-1,4-diisopropylbenzene, 1,3-bis[2-(4-hydroxyphenyl)-2-propyl]benzene, bis(4-hydroxyphenyl)methane, bis(4-hydroxyphenyl)cyclohexylmethane, bis(4-hydroxyphenyl)phenylmethane, bis(4-hydroxyphenyl) (4-propenylphenyl)methane, bis(4-hydroxyphenyl)diphenylmethane, bis(4-hydroxyphenyl)naphthylmethane, 1,1-bis(4-hydroxyphenyl)ethane, 1,1-bis(4-hydroxyphenyl)-1-phenylethane, 1,1-bis(4-hydroxyphenyl)-1-naphthylethane, 1,1-bis(4-hydroxyphenyl)butane, 2,2-bis(4-hydroxyphenyl)butane, 2,2-bis(4-hydroxyphenyl)pentane, 1,1-bis(4-hydroxyphenyl)hexane, 2,2-bis(4-hydroxyphenyl)hexane, 1,1-bis(4-hydroxyphenyl)octane, 2,2-bis(4-hydroxyphenyl)octane, 4,4-bis(4-hydroxyphenyl)heptane, 2,2-bis(4-hydroxyphenyl)nonane, 1,1-bis(4-hydroxyphenyl)decane, and 1,1-bis(4-hydroxyphenyl)dodecane;
bis(hydroxyaryl)cycloalkanes such as 1,1-bis(4-hydroxyphenyl)cyclopentane, 1,1-bis(4-hydroxyphenyl)cyclohexane, 1,1-bis(4-hydroxyphenyl)-3,3-dimethylcyclohexane, 1,1-bis(4-hydroxyphenyl)-3,4-dimethylcyclohexane, 1,1-bis(4-hydroxyphenyl)-3,5-dimethylcyclohexane, 1,1-bis(4-hydroxyphenyl)-3,3,5-trimethylcyclohexane, 1,1-bis(4-hydroxy-3,5-dimethylphenyl)-3,3,5-trimethylcyclohexane, 1,1-bis(4-hydroxyphenyl)-3-propyl-5-methylcyclohexane, 1,1-bis(4-hydroxyphenyl)-3-tert-butylcyclohexane, 1,1-bis(4-hydroxyphenyl)-4-tert-butylcyclohexane, 1,1-bis(4-hydroxyphenyl)-3-phenylcyclohexane, and 1,1-bis(4-hydroxyphenyl)-4-phenylcyclohexane;

cardo structure-containing bisphenols such as 9,9-bis(4-hydroxyphenyl)fluorene and 9,9-bis(4-hydroxy-3-methylphenyl) fluorene;

dihydroxydiaryl sulfides such as 4,4'-dihydroxydiphenyl sulfide and 4,4'-dihydroxy-3,3'-dimethyldiphenyl sulfide; dihydroxydiaryl sulfoxides such as 4,4'-dihydroxydiphenyl sulfoxide and 4,4'-dihydroxy-3,3'-dimethyldiphenyl sulfoxide; and dihydroxydiaryl sulfones such as 4,4'-dihydroxydiphenyl sulfone and 4,4'-dihydroxy-3,3'-dimethyldiphenyl sulfone.

Among the preceding, the bis(hydroxyaryl)alkanes are preferred and among them the bis(4-hydroxyphenyl)alkanes are preferred, while 2,2-bis(4-hydroxyphenyl)propane (i.e., bisphenol A) and 2,2-bis(3-methyl-4-hydroxyphenyl)propane (i.e., bisphenol C) are particularly preferred from the standpoints of impact resistance and heat resistance.

A single aromatic dihydroxy compound may be used or any combination of two or more in any ratio may be used.

Of the monomers comprising the starting materials for polycarbonate resin, the carbonate precursor can be exemplified by carbonyl halides and carbonate esters. A single carbonate precursor may be used or any combination of two or more in any ratio may be used.

The carbonyl halides can be specifically exemplified by phosgene and by haloformates such as the bischloroformates of dihydroxy compounds and the monochloroformates of dihydroxy compounds.

The carbonate esters can be specifically exemplified by diaryl carbonates such as diphenyl carbonate and ditolyl carbonate; dialkyl carbonates such as dimethyl carbonate and diethyl carbonate; and carbonates of dihydroxy compounds, e.g., biscarbonates of dihydroxy compounds, monocarbonates of dihydroxy compounds, and cyclic carbonates.

There are no particular limitations on the method of producing the polycarbonate resin (A), and any method can be used. Examples thereof are the interfacial polymerization method, melt transesterification method, pyridine method, ring-opening polymerization of a cyclic carbonate compound, and solid-state transesterification of a prepolymer. Among these, polycarbonate resin (A) produced by interfacial polymerization or melt transesterification is preferred because this provides a greater improving effect for the moist heat resistance, with interfacial polymerization being particularly preferred.

The molecular weight of the polycarbonate resin (A), expressed as the viscosity-average molecular weight (Mv) converted from the solution viscosity measured at a temperature of 25°C using methylene chloride as the solvent, is preferably 10,000 to 50,000, more preferably 10,000 to 40,000, still more preferably 10,000 to 30,000, and even more preferably 10,000 to 26,000, and is preferably at least 10,500, more preferably at least 11,000, particularly preferably at least 11,500, and most preferably at least 12,000, and is preferably not more than 24,000 and particularly preferably not more than 20,000. The mechanical strength of the polycarbonate resin composition according to the present invention can be further improved by having the viscosity-average molecular weight be equal to or greater than the lower limit for the indicated range. By having the viscosity-average molecular weight be not more than the upper limit for the indicated range, reductions in the fluidity of the polycarbonate resin composition according to the present invention can be suppressed and thereby ameliorated, thus raising the molding processability and facilitating the execution of molding operations.

A mixture of two or more polycarbonate resins having different viscosity-average molecular weights may be used, in which case a polycarbonate resin having a viscosity-average molecular weight outside the aforementioned preferred range may be admixed.

The viscosity-average molecular weight [Mv] refers to the value calculated using Schnell's viscosity equation, i.e., $\eta = 1.23 \times 10^{-4} Mv^{0.83}$, wherein the intrinsic viscosity [η] (unit: dl/g) at a temperature of 25°C is determined using methylene chloride as the solvent and using a Ubbelohde viscometer. The intrinsic viscosity [η] is the value calculated using the following formula and the specific viscosity [$\eta_{sp}$] measured at each solution concentration [C] (g/dl) .

[Math. 1]

$$\eta = \lim_{c \to 0} \eta_{sp} / c$$

In addition, the polycarbonate resin (A) may contain a polycarbonate oligomer in order to bring about an improved appearance for the molded article and an improved fluidity. The viscosity-average molecular weight [Mv] of this polycarbonate oligomer is generally at least 1,500 and is preferably at least 2,000 and is generally not more than 9,500 and is preferably not more than 9,000. The incorporated polycarbonate oligomer is preferably not more than 30 mass% of the polycarbonate resin (including the polycarbonate oligomer).
The polycarbonate resin (A) may be not only a virgin starting material, but may be a polycarbonate resin that has been regenerated from post-consumer products (also known as material-recycled polycarbonate resin), and also preferably contains both virgin starting material and recycled resin and may be composed of recycled polycarbonate resin. The proportion of recycled polycarbonate resin in the polycarbonate resin (A) is preferably at least 40%, at least 50%, at least 60%, and at least 80%, and particularly preferably is 100%.

[Arylphosphine Oxide (B)]

The polycarbonate resin composition according to the present invention contains an arylphosphine oxide (B). Preferred examples of the arylphosphine oxide (B) are triphenylphosphine oxide, diphenylbutylphosphine oxide, diphenyloctadecylphosphine oxide, tris(p-tolyl)phosphine oxide, tris(p-nonylphenyl)phosphine oxide, tris(naphthyl)phosphine oxide, diphenyl(hydroxymethyl)phosphine oxide, diphenyl(acetoxymethyl)phosphine oxide, diphenyl(β-ethylcarboxyethyl)phosphine oxide, tris(p-chlorophenyl)phosphine oxide, tris(p-fluorophenyl)phosphine oxide, diphenylbenzylphosphine oxide, diphenyl-β-cyanoethylphosphine oxide, diphenyl(p-hydroxyphenyl)phosphine oxide, diphenyl-1,4-dihydroxyphenyl-2-phosphine oxide, and phenylnaphthylbenzylphosphine oxide, with triarylphosphine oxides being more preferred and triphenylphosphine oxide being particularly preferred.
The content of the arylphosphine oxide (B) is 0.001 to 0.3 mass parts per 100 mass parts of the polycarbonate resin (A). At such an amount, the resin composition containing the combination with the phenolic structure-bearing compound (C1) has a favorable hue and also an excellent resistance to moist heat discoloration. The content of the arylphosphine oxide (B) is preferably at least 0.002 mass parts, more preferably at least 0.003 mass parts or at least 0.004 mass parts, and particularly preferably at least 0.005 mass parts, and is preferably not more than 0.25 mass parts, more preferably not more than 0.2 mass parts, or not more than 0.15 mass parts, or not more than 0.13 mass parts, and particularly preferably not more than 0.1 mass parts.

[Phenolic Structure-Bearing Compound (C1)]

The polycarbonate resin composition according to the present invention contains a phenolic structure-bearing compound (C1).
The phenolic structure-bearing compound (C1) is a compound in which a hydroxy group is directly bonded to a benzene ring, and in the present invention is at least one selection from 2,2-bis(4-hydroxyphenyl)propane (i.e., bisphenol A), 4-tert-butylphenol, cumylphenol, and phenol. Among these, 2,2-bis(4-hydroxyphenyl)propane, 4-tert-butylphenol, and cumylphenol are more preferred and 2,2-bis(4-hydroxyphenyl)propane and 4-tert-butylphenol are particularly preferred.
A single species of the phenolic structure-bearing compound (C1) may be used by itself or two or more may be contained.
The content of the phenolic structure-bearing compound (C1) is 0.0012 to 0.03 mass parts per 100 mass parts of the polycarbonate resin (A). When two or more species of phenolic structure-bearing compound (C1) are contained, this content refers to their total amount. At such an amount, the resin composition containing the combination with the arylphosphine oxide (B) has a favorable hue and also an excellent resistance to moist heat discoloration.
The content of the phenolic structure-bearing compound (C1), expressed per 100 mass parts of the polycarbonate resin (A), is preferably at least 0.0015 mass parts, more preferably at least 0.002 mass parts or at least 0.003 mass parts, and particularly preferably at least 0.004 mass parts, and is preferably not more than 0.025 mass parts, more preferably not more than 0.02 mass parts or not more than 0.015 mass parts, and particularly preferably not more than 0.013 mass parts.
For the case of containing bisphenol A as the phenolic structure-bearing compound (C1), the content, per 100 mass parts of the polycarbonate resin (A), is 0.002 to 0.03 mass parts and preferably 0.004 to 0.01 mass parts.
For the case of containing 4-tert-butylphenol, the content, per 100 mass parts of the polycarbonate resin (A), is 0.0012 to 0.01 mass parts and preferably 0.002 to 0.003 mass parts.
For the case of containing cumylphenol, the content, per 100 mass parts of the polycarbonate resin (A), is 0.0012 to 0.01 mass parts and preferably 0.002 to 0.003 mass parts.
For the case of containing phenol, the content, per 100 mass parts of the polycarbonate resin (A), is 0.0012 to 0.01 mass parts and preferably 0.002 to 0.003 mass parts.
The bisphenol A, 4-tert-butylphenol, cumylphenol, and phenol used or by-produced in the production of the

polycarbonate resin (A) may be present in a free state, and the amounts of these are also included in the amount of the phenolic structure-bearing compound (C1).

The polycarbonate resin composition according to the present invention preferably also contains an arylphosphine (C2).

Preferred examples of the arylphosphine (C2) are triphenylphosphine, diphenylbutylphosphine, diphenyloctadecylphosphine, tris(p-tolyl)phosphine, tris(p-nonylphenyl)phosphine, tris(naphthyl)phosphine, diphenyl(hydroxymethyl)phosphine, diphenyl(acetoxymethyl)phosphine, diphenyl(β-ethylcarboxyethyl)phosphine, tris(p-chlorophenyl)phosphine, tris(p-fluorophenyl)phosphine, diphenylbenzylphosphine, diphenyl-β-cyanoethylphosphine, diphenyl(p-hydroxyphenyl)phosphine, diphenyl-1,4-dihydroxyphenyl-2-phosphine, and phenylnaphthylbenzylphosphine, with triarylphosphines being preferred, triphenylphosphine and tritolylphosphine being more preferred, and triphenylphosphine being particularly preferred.

When the arylphosphine (C2) is contained, its content is preferably 0.001 to 0.3 mass parts per 100 mass parts of the polycarbonate resin (A). At such an amount, the resin composition containing the combination with the arylphosphine oxide (B) and the phenolic structure-bearing compound (C1) has an even better hue and also an even better resistance to moist heat discoloration. The content of the arylphosphine (C2) is more preferably at least 0.005 mass parts, still more preferably at least 0.008 mass parts, and particularly preferably at least 0.01 mass parts, and is more preferably not more than 0.25 mass parts, still more preferably not more than 0.2 mass parts, or not more than 0.15 mass parts, or not more than 0.1 mass parts, or not more than 0.05 mass parts, and particularly preferably not more than 0.04 mass parts.

The mass ratio C2/B between the contents of the arylphosphine (C2) and arylphosphine oxide (B) is preferably at least 0 and not more than 6, more preferably greater than 0 and not more than 6, still more preferably at least 0.1 and not more than 2.0, and particularly preferably at least 0.2 and not more than 0.4.

The polycarbonate resin composition according to the present invention preferably also contains an epoxy compound (C3).

A compound having one or more epoxy groups in a single molecule is used as the epoxy compound (C3). Preferred specific examples are as follows: phenyl glycidyl ether, allyl glycidyl ether, t-butylphenyl glycidyl ether, 3,4-epoxycyclohexylmethyl 3',4'-epoxycyclohexylcarboxylate, 3,4-epoxy-6-methylcyclohexylmethyl 3',4'-epoxy-6'-methylcyclohexylcarboxylate, 2,3-epoxycyclohexylmethyl 3',4'-epoxycyclohexylcarboxylate, 4-(3,4-epoxy-5-methylcyclohexyl)butyl 3',4'-epoxycyclohexylcarboxylate, 3,4-epoxycyclohexylethylene oxide, cyclohexylmethyl 3,4-epoxycyclohexylcarboxylate, 3,4-epoxy-6-methylcyclohexylmethyl 6'-methylcyclohexylcarboxylate, bisphenol A diglycidyl ether, tetrabromobisphenol A glycidyl ether, the diglycidyl ester of phthalic acid, the diglycidyl ester of hexahydrophthalic acid, bis-epoxydicyclopentadienyl ether, bis-epoxyethylene glycol, bis-epoxycyclohexyl adipate, butadiene diepoxide, tetraphenylethylene epoxide, octyl epoxy tallate, epoxidized polybutadiene, 3,4-dimethyl-1,2-epoxycyclohexane, 3,5-dimethyl-1,2-epoxycyclohexane, 3-methyl-5-t-butyl-1,2-epoxycyclohexane, octadecyl 2,2-dimethyl-3,4-epoxycyclohexylcarboxylate, n-butyl 2,2-dimethyl-3,4-epoxycyclohexylcarboxylate, cyclohexyl 2-methyl-3,4-epoxycyclohexylcarboxylate, n-butyl 2-isopropyl-3,4-epoxy-5-methylcyclohexylcarboxylate, octadecyl 3,4-epoxycyclohexylcarboxylate, 2-ethylhexyl 3',4'-epoxycyclohexylcarboxylate, 4,6-dimethyl-2,3-epoxycyclohexyl 3',4'-epoxycyclohexylcarboxylate, 4,5-epoxytetrahydrophthalic anhydride, 3-t-butyl-4,5-epoxytetrahydrophthalic anhydride, diethyl 4,5-epoxy-cis-1,2-cyclohexyldicarboxylate, di-n-butyl 3-t-butyl-4,5-epoxy-cis-1,2-cyclohexyldicarboxylate, epoxidized soy oil, and epoxidized linseed oil.

Among the preceding, the use of alicyclic epoxy compounds is preferred, and 3,4-epoxycyclohexylmethyl 3',4'-epoxycyclohexylcarboxylate is particularly preferred.

When the epoxy compound (C3) is contained, its content is preferably 0.001 to 0.3 mass parts per 100 mass parts of the polycarbonate resin (A). At such an amount, the resin composition also containing the arylphosphine oxide (B) and the phenolic structure-bearing compound (C1) exhibits an even better hue and also an even better resistance to moist heat discoloration. The content of the epoxy compound (C3) is more preferably at least 0.005 mass parts, still more preferably at least 0.008 mass parts, and particularly preferably at least 0.01 mass parts, and is more preferably not more than 0.25 mass parts, still more preferably not more than 0.2 mass parts, or not more than 0.15 mass parts, or not more than 0.1 mass parts, or not more than 0.07 mass parts, or not more than 0.05 mass parts, and particularly preferably is not more than 0.04 mass parts.

[Phosphorus Stabilizer]

The polycarbonate resin composition according to the present invention preferably also contains a phosphorus stabilizer. Through containing a phosphorus stabilizer, the polycarbonate resin composition according to the present invention takes on an even better hue and exhibits additional improvements in the resistance to moist heat discoloration.

Any known phosphorus stabilizer can be used as the phosphorus stabilizer. Specific examples are the oxo acids of phosphorus, e.g., phosphoric acid, phosphonic acid, phosphorous acid, phosphinic acid, and polyphosphoric acid; acidic pyrophosphate metal salts, e.g., sodium acidic pyrophosphate, potassium acidic pyrophosphate, and calcium

acidic pyrophosphate; salts of phosphoric acid with a Group 1 or Group 2B metal, e.g., potassium phosphate, sodium phosphate, cesium phosphate, and zinc phosphate; phosphate compounds; phosphite compounds; and phosphonite compounds, with compounds having a phosphite structure being particularly preferred. A polycarbonate resin composition that has a better discoloration resistance and a better continuous productivity is obtained by selecting a phosphite compound.

This phosphite compound is a trivalent phosphorus compound having a structure given by the general formula $P(OR)_3$ wherein R represents a monovalent or divalent organic group.

Such phosphite compounds are exemplified by triphenyl phosphite, tris(monononylphenyl) phosphite, tris(monononyl/dinonyl · phenyl) phosphite, tris(2,4-di-tert-butylphenyl) phosphite, monooctyl diphenyl phosphite, dioctyl monophenyl phosphite, monodecyl diphenyl phosphite, didecyl monophenyl phosphite, tridecyl phosphite, trilauryl phosphite, tristearyl phosphite, distearyl pentaerythritol diphosphite, bis(2,4-di-tert-butyl-4-methylphenyl) pentaerythritol phosphite, bis(2,6-di-tert-butylphenyl) octyl phosphite, 2,2-methylenebis(4,6-di-tert-butylphenyl) octyl phosphite, tetrakis(2,4-di-tert-butylphenyl)-4,4'-biphenylene diphosphite, and 6-[3-(3-tert-butyl-hydroxy-5-methylphenyl)propoxy]-2,4,8,10-tetra-tert-butyldibenzo[d,f][1,3,2]dioxaphosphepine.

Among these phosphite compounds, the aromatic phosphite compounds represented by the following formulas (1) and (2) are more preferred because they effectively increase the resistance to moist heat discoloration exhibited by the polycarbonate resin composition according to the present invention.

[C1]

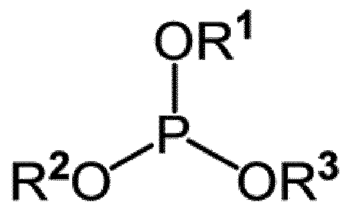

(1)

[In formula (1), $R^1$, $R^2$, and $R^3$ each independently represent an aryl group having 6 to 30 carbons.]

[C2]

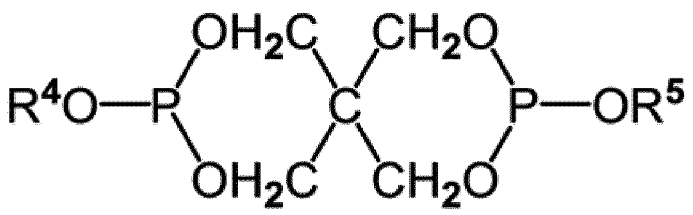

(2)

[In formula (2), $R^4$ and $R^5$ each independently represent an aryl group having 6 to 30 carbons.]

Among the preceding, the phosphite compound represented by formula (1) is preferably triphenyl phosphite, tris(monononylphenyl) phosphite, tris(2,4-di-tert-butylphenyl) phosphite, and so forth, whereamong tris(2,4-di-tert-butylphenyl) phosphite is more preferred. These organophosphite compounds can be specifically exemplified by "Adeka Stab 1178" from the ADEKA Corporation, "Sumilizer TNP" from Sumitomo Chemical Co., Ltd., "JP-351" from Johoku Chemical Co., Ltd., "Adeka Stab 2112" from the ADEKA Corporation, "Irgafos 168" from BASF, and "JP-650" from Johoku Chemical Co., Ltd.

Among the phosphite compounds represented by formula (2), those having a pentaerythritol diphosphite structure, such as bis(2,4-di-tert-butyl-4-methylphenyl) pentaerythritol diphosphite, bis(2,6-di-tert-butyl-4-methylphenyl) pentaerythritol diphosphite, and bis(2,4-dicumylphenyl) pentaerythritol diphosphite, are particularly preferred. Specific preferred examples of these organophosphite compounds are "Adeka Stab PEP-36" and "Adeka Stab PEP-24G" from the ADEKA Corporation and "Doverphos S-9228" from Dover Chemical Corporation.

A single phosphorus stabilizer may be contained or two or more phosphorus stabilizers may be contained in any combination and any ratio.

The content of the phosphorus stabilizer, per 100 mass parts of the polycarbonate resin (A), is preferably 0.005 to 0.5 mass parts and more preferably at least 0.007 mass parts, still more preferably at least 0.008 mass parts, and

particularly preferably at least 0.01 mass parts, and more preferably not more than 0.4 mass parts, still more preferably not more than 0.3 mass parts, even more preferably not more than 0.2 mass parts, and particularly not more than 0.1 mass parts. Additional improvements in the hue and resistance to moist heat discoloration are prone to be inadequate when the phosphorus stabilizer content is less than the 0.005 mass parts in the indicated range; when the phosphorus stabilizer content exceeds 0.5 mass parts, the resistance to moist heat discoloration may actually deteriorate and the moist heat stability may also decline.

[Mold-Release Agent]

The resin composition according to the present invention preferably also contains a mold-release agent.

The mold-release agent can be exemplified by aliphatic carboxylic acids, aliphatic carboxylic acid/alcohol esters, aliphatic hydrocarbon compounds having a number-average molecular weight of 200 to 15,000, and polysiloxane silicone oils.

The aliphatic carboxylic acids can be exemplified by saturated or unsaturated monobasic, dibasic, or tribasic aliphatic carboxylic acids. The aliphatic carboxylic acid here also encompasses alicyclic carboxylic acids. Among these, preferred aliphatic carboxylic acids are monobasic or dibasic carboxylic acids having 6 to 36 carbons, while saturated monobasic aliphatic carboxylic acids having 6 to 36 carbons are more preferred. Specific examples of these aliphatic carboxylic acids are palmitic acid, stearic acid, caproic acid, capric acid, lauric acid, arachidic acid, behenic acid, lignoceric acid, cerotic acid, melissic acid, tetratriacontanoic acid, montanic acid, adipic acid, and azelaic acid.

For example, the same aliphatic carboxylic acids as cited above can be used for the aliphatic carboxylic acid in the aliphatic carboxylic acid/alcohol ester. The alcohol, on the other hand, can be exemplified by saturated or unsaturated monohydric or polyhydric alcohols. These alcohols may have a substituent such as a fluorine atom, aryl group, and so forth. Among the preceding, monohydric or polyhydric saturated alcohols having not more than 30 carbons are preferred, while aliphatic saturated monohydric alcohols and aliphatic saturated polyhydric alcohols, in each case having not more than 30 carbons, are more preferred. Here, aliphatic is used as a term that also encompasses alicyclic compounds.

The alcohol under consideration can be specifically exemplified by the following: octanol, decanol, dodecanol, stearyl alcohol, behenyl alcohol, ethylene glycol, diethylene glycol, glycerol, pentaerythritol, 2,2-dihydroxyperfluoropropanol, neopentylene glycol, ditrimethylolpropane, and dipentaerythritol.

The ester may contain the aliphatic carboxylic acid and/or the alcohol as impurities. In addition, the ester may be a pure material or may be a mixture of a plurality of compounds. A single aliphatic carboxylic acid or any combination in any proportion of two or more may be used for the aliphatic carboxylic acid constituting one ester by bonding therein, and a single alcohol or any combination in any proportion of two or more may be used for the alcohol constituting one ester by bonding therein.

Specific examples of the aliphatic carboxylic acid/alcohol esters are beeswax (a mixture in which melissyl palmitate is the main component), stearyl stearate, behenyl behenate, stearyl behenate, glycerol monopalmitate, glycerol monostearate, glycerol distearate, glycerol tristearate, pentaerythritol monopalmitate, pentaerythritol monostearate, pentaerythritol distearate, pentaerythritol tristearate, and pentaerythritol tetrastearate.

The aliphatic hydrocarbon having a number-average molecular weight of 200 to 15,000 can be exemplified by liquid paraffin, paraffin wax, microwax, polyethylene wax, Fischer-Tropsch waxes, and oligomers of $C_{3-12}$ $\alpha$-olefin. This aliphatic hydrocarbon also encompasses alicyclic hydrocarbons. These hydrocarbons may be partially oxidized.

Among the preceding, paraffin waxes, polyethylene waxes, and partially oxidized polyethylene waxes are preferred, with paraffin waxes and polyethylene waxes being more preferred.

The number-average molecular weight of the aliphatic hydrocarbon is preferably not more than 5,000.

The aliphatic hydrocarbon may be a single substance; however, a mixture of aliphatic hydrocarbons having various constituent components and/or molecular weights may be used as long as the major component is in the range indicated above.

The polysiloxane silicone oil can be exemplified by dimethylsilicone oil, methylphenylsilicone oil, diphenylsilicone oil, fluoroalkylsilicone, and so forth.

A single mold-release agent as described above may be contained or any combination of two or more in any ratio may be contained.

The content of the mold-release agent, per 100 mass parts of the polycarbonate resin (A), is generally at least 0.001 mass parts and is preferably at least 0.01 mass parts and is generally not more than 2 mass parts, preferably not more than 1 mass parts, and more preferably not more than 0.5 mass parts. The mold-release effect may be unsatisfactory when the content of the mold-release agent is below the lower limit for the indicated range, while the hydrolysis resistance may be lowered and mold contamination during injection molding and so forth may be produced when the content of the mold-release agent exceeds the upper limit for the indicated range.

[Ultraviolet Absorber]

The polycarbonate resin composition according to the present invention preferably also contains an ultraviolet absorber.

The ultraviolet absorber can be exemplified by inorganic ultraviolet absorbers such as cerium oxide and zinc oxide and by organic ultraviolet absorbers such as benzotriazole compounds, benzophenone compounds, salicylate compounds, cyanoacrylate compounds, triazine compounds, oxanilide compounds, malonate ester compounds, and hindered amine compounds. Among the preceding, organic ultraviolet absorbers are preferred and benzotriazole compounds are more preferred. The resin composition according to the present invention may be provided with a favorable transparency and favorable mechanical properties by selecting an organic ultraviolet absorber.

The benzotriazole compounds can be specifically exemplified by 2-(2'-hydroxy-5'-methylphenyl)benzotriazole, 2-[2'-hydroxy-3',5'-bis(α,α-dimethylbenzyl)phenyl]benzotriazole, 2-(2'-hydroxy-3',5'-di-tert-butylphenyl)benzotriazole, 2-(2'-hydroxy-3'-tert-butyl-5'-methylphenyl)-5-chlorobenzotriazole, 2-(2'-hydroxy-3',5'-di-tert-butylphenyl)-5-chlorobenzotriazole, 2-(2'-hydroxy-3',5'-di-tert-amyl)benzotriazole, 2-(2'-hydroxy-5'-tert-octylphenyl)benzotriazole, and 2,2'-methylenebis[4-(1,1,3,3-tetramethylbutyl)-6-(2H-benzotriazol-2-yl)phenol], among which 2-(2'-hydroxy-5'-tert-octylphenyl)benzotriazole and 2,2'-methylenebis[4-(1,1,3,3-tetramethylbutyl)-6-(2H-benzotriazol-2-yl)phenol] are preferred and 2-(2'-hydroxy-5'-tert-octylphenyl)benzotriazole is particularly preferred.

The benzophenone compounds can be specifically exemplified by 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-n-dodecyloxybenzophenone, bis(5-benzoyl-4-hydroxy-2-methoxyphenyl)methane, 2,2'-dihydroxy-4-methoxybenzophenone, and 2,2'-dihydroxy-4,4'-dimethoxybenzophenone.

The salicylate compounds can be specifically exemplified by phenyl salicylate and 4-tert-butylphenyl salicylate.

The cyanoacrylate compounds can be specifically exemplified by ethyl 2-cyano-3,3-diphenylacrylate and 2-ethylhexyl 2-cyano-3,3-diphenylacrylate.

The oxanilide compounds can be specifically exemplified by 2-ethoxy-2'-ethyloxalinic acid bisanilide.

The malonate ester compound is preferably an ester of 2-(alkylidene)malonic acid with esters of 2-(1-arylalkylidene)malonic acid being more preferred.

When an ultraviolet absorber is contained, its content, expressed per 100 mass parts of the polycarbonate resin (A), is generally at least 0.05 mass parts and preferably at least 0.1 mass parts and is generally not more than 1 mass parts and preferably not more than 0.5 mass parts. The improvement in the weathering resistance and light resistance may not be adequate when the content of the ultraviolet absorber is less than the lower limit on the indicated range, while, e.g., mold deposits and so forth may be produced and mold contamination may be caused when the content of the ultraviolet absorber exceeds the upper limit on the indicated range.

A single ultraviolet absorber may be contained or any combination of two or more in any ratio may be contained.

[Additives, etc.]

The polycarbonate resin composition according to the present invention may contain additives other than those described above, for example, additives such as antioxidant, fluorescent brightener, pigment, dye, flame retardant, impact resistance enhancer, plasticizer, compatibilizer, and so forth. A single one of these additives or two or more of these additives may be contained.

Resins other than the polycarbonate resin (A) may also be contained. These additional resins can be exemplified by thermoplastic polyester resins, e.g., polyethylene terephthalate, polytrimethylene terephthalate, and polybutylene terephthalate; styrenic resins such as polystyrene resin, high-impact polystyrene resin (HIPS), and acrylonitrile-styrene copolymers (AS resin); polyolefin resins such as polyethylene resin and polypropylene resin; polyamide resin; polyimide resin; polyetherimide resin; polyurethane resin; polyphenylene ether resin; polyphenylene sulfide resin; polysulfone resin; and polymethacrylate resin. ABS resin and polybutylene terephthalate resin are particularly preferred for the additional resin.

[Polycarbonate Resin Composition]

The polycarbonate resin composition according to the present invention has an excellent resistance to moist heat discoloration, and, as a consequence, upon testing a 3 mm-thick test specimen for 100 hours in a pressure cooker tester (PCT), the difference ΔYI between YI in the thickness direction (3 mmt) after the test (post-PCT YI) and YI before the test (initial YI), i.e., (post-PCT YI) - (initial YI), can be brought to preferably not more than 3.5, more preferably not more than 3, still more preferably not more than 2.5, or not more than 2, or not more than 1.8, or not more than 1.6, and in particular not more than 1.5.

The details of the method for measuring ΔYI are described in the Examples.

[Examples]

In order to confirm the effects of the polycarbonate resin composition according to the present invention, polycarbonate resin compositions were produced with the adjustments described in the following, but the present invention should not be construed as being limited to or by the Examples that follow.

The following Table 1 provides the components that were used.

[Table 1]

| component | designation | |
|---|---|---|
| PC resin (A) | A1 | aromatic polycarbonate resin obtained by interfacial polymerization using bisphenol A as a starting material<br>"H-4000F" from Mitsubishi Engineering-Plastics Corporation<br>Mv : 16,000<br>bisphenol A content: 0.0004 wt%<br>4-tert-butylphenol content: 0.0010 wt%<br>4-$\alpha$-cumylphenol content : none<br>phenol content: none |
| | A2 | recycled aromatic polycarbonate resin, collected from market<br>"PC-50S" from Ningbo Xuri Hongyu Technology Co., Ltd.<br>Mv : 16,000<br>bisphenol A content: 0.0017 wt%<br>4-tert-butylphenol content: 0.0004 wt%<br>4-$\alpha$-cumylphenol content : none<br>phenol content: none |
| arylphosphine oxide (B) | B | triphenylphosphine oxide<br>from FUJIFILM Wako Pure Chemical Corporation |
| phenolic structure-bearing compound (C1) | C1-1 | bisphenol A<br>from Tokyo Chemical Industry Co., Ltd. |
| | C1-2 | 4-tert-butylphenol<br>from Tokyo Chemical Industry Co., Ltd. |
| | C1-3 | 4-$\alpha$-cumylphenol<br>from Tokyo Chemical Industry Co., Ltd. |
| arylphosphine (C2) | C2 | triphenylphosphine<br>from FUJIFILM Wako Pure Chemical Corporation |
| epoxy compound (C3) | C3 | 3,4-epoxycyclohexylmethyl-3',4'-epoxycyclohexanecarboxylate<br>"Celloxide 2021P" from Daicel Corporation |
| phosphorus stabilizer | D1 | tris(2,4-di-tert-butylphenyl) phosphite<br>"Adeka Stab 2112" from the ADEKA Corporation |
| | D2 | bis(2,6-di-tert-butyl-4-methylphenyl) pentaerythritol diphosphite<br>"Adeka Stab PEP-36" from the ADEKA Corporation |
| mold-release agent | E | pentaerythritol tetrastearate<br>from Cognis Oleochemicals Japan, Ltd.<br>"Loxiol VPG-861" |
| UV absorber | F | 2-(2-hydroxy-5-t-octylphenyl)-2H-benzotriazole from Shipro Kasei Kaisha, Ltd., "Seesorb 709" |

The amounts of bisphenol A, 4-tert-butylphenol, cumylphenol, and phenol in the above-described polycarbonate resins (A1) and (A2) were measured as follows.

The polycarbonate resin was dissolved in a dichloromethane solution; methanol was added to this dropwise to reprecipitate the polymer component; filtration was performed and the filtrate was dried to solidification; and this product was dissolved in 5 ml of methanol. This methanol solution was analyzed by high-performance liquid chromatography ("LC-20AD Prominence" from Shimadzu Corporation) to determine the contents of the bisphenol A, 4-tert-butylphenol, cumylphenol, and phenol. Calibration curves constructed from separately prepared standard substances were used to calculate the contents.

This same procedure was also used to measure the amounts of bisphenol A, 4-tert-butylphenol, cumylphenol, and phenol in the polycarbonate resin compositions obtained in the following Examples and Comparative Examples.

(Examples 1 to 20 and Comparative Examples 1 to 19)

The components specified above were blended in the proportions (mass parts) indicated in the following Tables 2 to 6 and were mixed for 20 minutes with a tumbler; this was followed by melt kneading at a cylinder temperature of 240°C with a vented single-screw extruder having a screw diameter of 40 mm ("VS-40" from Tanabe Plastics Machinery Co., Ltd.) and pellet production by strand cutting.

The amounts of bisphenol A, 4-tert-butylphenol, cumylphenol, and phenol in the polycarbonate resin composition pellets obtained as described above were measured by the same method as described above, and the results are given in the following Tables 2 to 6 in mass parts per 100 mass parts of polycarbonate resin.

The obtained pellets were dried for 5 hours at 120°C using a hot air circulation dryer, and a three-step plate having regions with a thickness of 1.0 mm, 2.0 mm, and 3.0 mm, respectively, was then molded at a resin temperature of 280°C and a mold temperature of 80°C using an injection molder ("J55AD" from The Japan Steel Works, Ltd.). The injection molding was carried out using the following conditions.

screw rotation rate: 100 rpm
back pressure (gauge pressure): 10 MPa
injection hold time: 10 sec
cooling time: 20 sec

YI in the thickness direction (initial YI) was measured in the 3.0 mm-thick region of the three-step plate. The measurement was carried out using an "SE-6000" color difference meter from Nippon Denshoku Industries Co., Ltd. based on JIS K 7105. The light source was set to C and the visual field was set to 2°.

This three-step plate was then held for 100 hours in a pressure cooker tester (PCT) at a temperature of 121°C, a humidity of 100%, and a gauge pressure of 0.1 MPa; this was followed by measurement of YI (post-PCT YI) using the same procedure and by the determination of ΔYI using the following formula. An "EHS-212MD" from the ESPEC Corporation was used for the PCT.

$$\Delta YI = (\text{post-PCT YI}) - (\text{initial YI})$$

The results of this evaluation are given in the following Tables 2 to 6.

[Table 2]

| | | Example | | | | | |
|---|---|---|---|---|---|---|---|
| | | 1 | 3 | 3 | 4 | 5 | 6 |
| PC resin (A) | A1 | 100 | 100 | 100 | 100 | 100 | 100 |
| | A2 | | | | | | |
| arylphosphine oxide (B) | B | 0.03 | 0.03 | 0.03 | 0.03 | 0.03 | 0.03 |
| phenolic structure-bearing compound (C1) | C1-1 | 0.01 | | 0.01 | 0.01 | | 0.01 |
| | C1-2 | | 0.002 | 0.002 | 0.002 | | |
| | C1-3 | | | | | 0.002 | 0.002 |
| arylphosphine (C2) | C2 | | | | | | |
| epoxy compound (C3) | C3 | | | | 0.05 | | |

(continued)

| | | Example | | | | | |
|---|---|---|---|---|---|---|---|
| | | 1 | 3 | 3 | 4 | 5 | 6 |
| phosphorus stabilizer | D1 | | | | | | |
| | D2 | | | | | | |
| mold-release agent | E | | | | | | |
| UV absorber | F | | | | | | |
| C2/B | | 0.0 | 0.0 | 0.0 | 0.0 | 0.0 | 0.0 |
| YI (3 mm) | | 1.3 | 1.4 | 1.3 | 1.3 | 1.4 | 1.3 |
| Δ YI (3 mm) | | 1.1 | 1.0 | 1.0 | 0.8 | 1.2 | 1.1 |
| total content in the composition | | | | | | | |
| bisphenol A | | 0.0079 | 0.0004 | 0.0079 | 0.0079 | 0.0004 | 0.0079 |
| 4-tert-butylphenol | | 0.0010 | 0.0028 | 0.0028 | 0.0028 | 0.0010 | 0.0010 |
| 4-$\alpha$-cumylphenol | | 0.0000 | 0.0000 | 0.0000 | 0.0000 | 0.0018 | 0.0018 |
| phenol | | 0.0000 | 0.0000 | 0.0000 | 0.0000 | 0.0000 | 0.0000 |

[Table 3]

| | | Comparative Example | | | | | | | | | |
|---|---|---|---|---|---|---|---|---|---|---|---|
| | | 1 | 2 | 3 | 4 | 5 | 6 | 7 | 8 | 9 | 10 |
| PC resin (A) | A1 | 100 | 100 | 100 | 100 | 100 | 100 | 100 | 100 | 100 | 100 |
| | A2 | | | | | | | | | | |
| arylphosphine oxide (B) | B | | 0.05 | 0.03 | | | | | | | |
| phenolic structure-bearing compound (C1) | C1-1 | | | | 0.01 | | | | | | |
| | C1-2 | | | | | 0.002 | | | | | |
| | C1-3 | | | | | | | | | | |
| arylphosphine (C2) | C2 | | | | | | | | | | |
| epoxy compound (C3) | C3 | | | | | | | | 0.03 | | 0.03 |
| phosphorus stabilizer | D1 | | | | | | 0.05 | 0.05 | 0.05 | | |
| | D2 | | | | | | | 0.05 | 0.05 | 0.05 | 0.05 |
| mold-release agent | E | | | | | | | | | | |
| UV absorber | F | | | | | | | | | | |
| C2/B | | - | 0.0 | 0.0 | - | - | - | - | - | - | - |
| YI (3 mm) | | 1.7 | 1.6 | 1.6 | 1.7 | 1,6 | 1.2 | 0.9 | 0.8 | 1.0 | 0.8 |
| ΔYI (3 mm) | | 1.4 | 2.6 | 1.1 | 1.3 | 1.3 | 5.7 | foaming | foaming | foaming | foaming |
| total content in the composition | | | | | | | | | | | |
| bisphenol A | | 0.0004 | 0.0004 | 0.0004 | 0.0079 | 0.0004 | 0.0004 | 0.0004 | 0.0004 | 0.0004 | 0.0004 |
| 4-tert-butylphenol | | 0.0010 | 0.0010 | 0.0010 | 0.0010 | 0.0028 | 0.0010 | 0.0010 | 0.0010 | 0.0010 | 0.0010 |
| 4-α-cumylphenol | | 0.0000 | 0.0000 | 0.0000 | 0.0000 | 0.0000 | 0.0000 | 0.0000 | 0.0000 | 0.0000 | 0.0000 |
| phenol | | 0.0000 | 0.0000 | 0.0000 | 0.0000 | 0.0000 | 0.0000 | 0.0000 | 0.0000 | 0.0000 | 0.0000 |

The "foaming" in the preceding table indicates that foaming and expanding occurred in the interior of the test specimen during the PCT test, resulting in an inability to measure ΔYI. The indication of "foaming" in the following tables has the same meaning.

[Table 4]

| | | Example | | | | | | | |
|---|---|---|---|---|---|---|---|---|---|
| | | 7 | 8 | 9 | 10 | 11 | 12 | 13 | 14 |
| PC resin (A) | A1 | 100 | 100 | 100 | 100 | 100 | 100 | 100 | 100 |
| | A2 | | | | | | | | |
| arylphosphine oxide (B) | B | 0.03 | 0.03 | 0.03 | 0.03 | 0.03 | 0.03 | 0.03 | 0.03 |
| phenolic structure-bearing compound (C1) | C1-1 | 0.005 | 0.01 | | | 0.01 | | 0.01 | |
| | C1-2 | | | 0.001 | 0.002 | | 0.002 | | 0.002 |
| | C1-3 | | | | | | | | |
| arylphosphine (C2) | C2 | 0.01 | 0.01 | 0.01 | 0.01 | 0.02 | 0.02 | 0.05 | 0.05 |
| epoxy compound (C3) | C3 | | | | | | | | |
| phosphorus stabilizer | D1 | | | | | | | | |
| | D2 | | | | | | | | |
| mold-release agent | E | | | | | | | | |
| UV absorber | F | | | | | | | | |
| C2/B | | 0.3 | 0.3 | 0.3 | 0.3 | 0.7 | 0.7 | 1.7 | 1.7 |
| YI (3 mm) | | 1.1 | 1.1 | 1.2 | 0.9 | 0.9 | 0.8 | 0.8 | 0.7 |
| Δ YI (3 mm) | | 0.3 | 0.3 | 0.5 | 0.3 | 0.4 | 0.8 | 0.7 | 0.9 |
| total content in the composition | | | | | | | | | |
| bisphenol A | | 0.0042 | 0.0079 | 0.0004 | 0.0004 | 0.0079 | 0.0004 | 0.0079 | 0.0004 |
| 4-tert-butylphenol | | 0.0010 | 0.0010 | 0.0019 | 0.0028 | 0.0010 | 0.0028 | 0.0010 | 0.0028 |
| 4-$\alpha$-cumylphenol | | 0.0000 | 0.0000 | 0.0000 | 0.0000 | 0.0000 | 0.0000 | 0.0000 | 0.0000 |
| phenol | | 0.0000 | 0.0000 | 0.0000 | 0.0000 | 0.0000 | 0.0000 | 0.0000 | 0.0000 |

[Table 5]

| | | Comparative Example | | | | |
|---|---|---|---|---|---|---|
| | | 11 | 12 | 13 | 14 | 15 |
| PC resin (A) | A1 | 100 | 100 | 100 | 100 | 100 |
| | A2 | | | | | |
| arylphosphine oxide (B) | B | | 0.0001 | 0.0001 | 0.0001 | 0.05 |
| phenolic structure-bearing compound (C1) | C1-1 | | | | | |
| | C1-2 | | | | | |
| | C1-3 | | | | | |

(continued)

| | | Comparative Example | | | | |
|---|---|---|---|---|---|---|
| | | 11 | 12 | 13 | 14 | 15 |
| arylphosphine (C2) | C2 | 0.05 | 0.05 | 0.05 | 0.05 | 0.0001 |
| epoxy compound (C3) | C3 | | | | | |
| phosphorus stabilizer | D1 | | | 0.05 | | |
| | D2 | | | | 0.05 | |
| mold-release agent | E | | | | | |
| UV absorber | F | | | | | |
| C2/B | | - | 500 | 500 | 500 | 0.002 |
| YI (3 mm) | | 1.0 | 1.0 | 0.9 | 1.0 | 1.6 |
| Δ YI (3 mm) | | 3.8 | 3.6 | 22.9 | foaming | 2.4 |
| total content in the composition | | | | | | |
| bisphenol A | | 0.0004 | 0.0004 | 0.0004 | 0.0004 | 0.0004 |
| 4-tert-butylphenol | | 0.0010 | 0.0010 | 0.0010 | 0.0010 | 0.0010 |
| 4-$\alpha$-cumylphenol | | 0.0000 | 0.0000 | 0.0000 | 0.0000 | 0.0000 |
| phenol | | 0.0000 | 0.0000 | 0.0000 | 0.0000 | 0.0000 |

[Table 6]

| | | Example | | | | | | Comparative Example | | | |
|---|---|---|---|---|---|---|---|---|---|---|---|
| | | 15 | 16 | 17 | 18 | 19 | 20 | 16 | 17 | 18 | 19 |
| PC resin (A) | A1 | | | | | 25 | 50 | | | | |
| | A2 | 100 | 100 | 100 | 100 | 75 | 50 | 100 | 100 | 100 | 100 |
| arylphosphine oxide (B) | B | 0.03 | 0.03 | 0.03 | 0.03 | 0.03 | 0.03 | | 0.05 | 0.03 | |
| phenolic structure-bearing compound (C1) | C1-1 | 0.01 | | 0.01 | | | | | | | |
| | C1-2 | | 0.002 | | 0.002 | 0.002 | 0.002 | | | | |
| | C1-3 | | | | | | | | | | |
| arylphosphine (C2) | C2 | | | 0.01 | 0.01 | 0.01 | 0.01 | | | | 0.03 |
| epoxy compound (C3) | C3 | | | | | | | | | | |
| phosphorus stabilizer | D1 | | | | | | | | | | |
| | D2 | | | | | | | | | | |
| mold-release agent | E | | | | | | | | | | |
| UV absorber | F | | | | | | | | | | |
| C2/B | | 0.0 | 0.0 | 0.3 | 0.3 | 0.3 | 0.3 | - | 0.0 | 0.0 | - |
| YI (3 mm) | | 1.9 | 1.8 | 1.6 | 1.5 | 1.4 | 1.2 | 2.2 | 2.1 | 2.1 | 1.5 |
| Δ YI (3 mm) | | 1.6 | 1.5 | 1.0 | 0.9 | 0.8 | 0.6 | 1.9 | 2.9 | 1.6 | 4.3 |
| total content in the composition | | | | | | | | | | | |
| bisphenol A | | 0.0092 | 0.0017 | 0.0092 | 0.0017 | 0.0017 | 0.0017 | 0.0017 | 0.0017 | 0.0017 | 0.0017 |
| 4-tert-butylphenol | | 0.0004 | 0.0022 | 0.0004 | 0.0022 | 0.0022 | 0.0022 | 0.0004 | 0.0004 | 0.0004 | 0.0004 |
| 4-$\alpha$-cumylphenol | | 0.0000 | 0.0000 | 0.0000 | 0.0000 | 0.0000 | 0.0000 | 0.0000 | 0.0000 | 0.0000 | 0.0000 |
| phenol | | 0.0000 | 0.0000 | 0.0000 | 0.0000 | 0.0000 | 0.0000 | 0.0000 | 0.0000 | 0.0000 | 0.0000 |

[Industrial Applicability]

The polycarbonate resin composition according to the present invention exhibits a favorable hue and an excellent resistance to moist heat discoloration and as a consequence can be advantageously used for various and diverse molded articles.

## Claims

1. A polycarbonate resin composition comprising, per 100 mass parts of a polycarbonate resin (A), 0.001 to 0.3 mass parts of an arylphosphine oxide (B) and 0.0012 to 0.03 mass parts of a phenolic structure-bearing compound (C1), wherein the phenolic structure-bearing compound (C1) is at least one selection from bisphenol A, 4-tert-butylphenol, cumylphenol, and phenol; and in a case of containing the bisphenol A, the content thereof is 0.002 to 0.03 mass parts; in a case of containing the 4-tert-butylphenol, the content thereof is 0.0012 to 0.01 mass parts; in a case of containing the cumylphenol, the content thereof is 0.0012 to 0.01 mass parts; and in a case of containing the phenol, the content thereof is 0.0012 to 0.01 mass parts.

2. The polycarbonate resin composition of claim 1, wherein the arylphosphine oxide (B) is triphenylphosphine oxide.

3. The polycarbonate resin composition of claim 1, further comprising 0.001 to 0.3 mass parts of an arylphosphine (C2).

4. The polycarbonate resin composition of claim 3, wherein the arylphosphine (C2) is triphenylphosphine.

5. The polycarbonate resin composition of claim 3, wherein a mass ratio C2/B between the arylphosphine (C2) and the arylphosphine oxide (B) is at least 0 and not greater than 6.

6. The polycarbonate resin composition of claim 1, further comprising 0.001 to 0.3 mass parts of an epoxy compound (C3).

7. The polycarbonate resin composition of claim 1, wherein the polycarbonate resin (A) comprises a recycled polycarbonate resin.

8. A pellet of the polycarbonate resin composition of any of claims 1 to 7.

9. A molded article comprising the polycarbonate resin composition of any of claims 1 to 7.

10. A molded article formed from pellets of the polycarbonate resin composition of claim 8.

## INTERNATIONAL SEARCH REPORT

International application No.
**PCT/JP2022/034682**

**A. CLASSIFICATION OF SUBJECT MATTER**

***C08L 69/00***(2006.01)i; ***C08J 5/00***(2006.01)i; ***C08K 5/13***(2006.01)i; ***C08K 5/1515***(2006.01)i; ***C08K 5/50***(2006.01)i; ***C08K 5/51***(2006.01)i; ***C08K 5/53***(2006.01)i
FI: C08L69/00; C08K5/51; C08K5/13; C08K5/50; C08K5/1515; C08K5/53; C08J5/00 CFD

According to International Patent Classification (IPC) or to both national classification and IPC

**B. FIELDS SEARCHED**

Minimum documentation searched (classification system followed by classification symbols)

C08L69/00; C08J5/00; C08K5/13; C08K5/1515; C08K5/50; C08K5/51; C08K5/53

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY(STN)

**C. DOCUMENTS CONSIDERED TO BE RELEVANT**

| Category* | Citation of document, with indication, where appropriate, of the relevant passages | Relevant to claim No. |
|---|---|---|
| A | JP 2014-62203 A (IDEMITSU KOSAN CO LTD) 10 April 2014 (2014-04-10) entire text | 1-10 |
| A | JP 7-207018 A (MITSUBISHI GAS CHEM CO INC) 08 August 1995 (1995-08-08) entire text | 1-10 |
| A | JP 2004-526843 A (BAYER AKTIENGESELLSCHAFT) 02 September 2004 (2004-09-02) entire text | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 November 2022** | **29 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/034682**

| Patent document cited in search report | Publication date (day/month/year) | Patent family member(s) | Publication date (day/month/year) |
|---|---|---|---|
| JP 2014-62203 A | 10 April 2014 | (Family: none) | |
| JP 7-207018 A | 08 August 1995 | (Family: none) | |
| JP 2004-526843 A | 02 September 2004 | US 2003/0013788 A1<br>entire text | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H11279396 A